# EUROPÄISCHE PATENTSCHRIFT

(11) **EP 2 222 974 B1**
(45) Veröffentlichungstag und Bekanntmachung des Hinweises auf die Patenterteilung: **23.12.2020**
(21) Anmeldenummer: 08844208.2
(22) Anmeldetag: 30.10.2008
(51) Int. Cl.: F16C 33/46, F16C 33/50, F16C 33/54, F16C 19/24

(54) **WÄLZLAGERKÄFIG GEBILDET AUS MEHREREN MITEINANDER VERBUNDENEN SEKTORELEMENTEN UND STEGELEMENTEN**
ROLLING BEARING CAGE
CAGE DE PALIER À ROULEMENT

(30) Priorität: 02.11.2007 DE 102007052507
(43) Veröffentlichungstag der Anmeldung: 01.09.2010
(73) Patentinhaber: AB SKF, 415 50 Göteborg (SE)
(72) Erfinder: BEYFUSS, Berthold, 97535 Kaisten (DE); FRIEDRICH, Hans-Jürgen, 97486 Königsberg-Römershofen (DE); RADINA, Alfred, 97711 Poppenlauer (DE); SCHIERLING, Jonas, 97437 Hassfurt (DE)
(74) Vertreter: Kohl, Thomas
(86) Internationale Anmeldenummer: PCT/EP2008/009163
(87) Internationale Veröffentlichungsnummer: WO 2009/056310

(56) Entgegenhaltungen:
- WO-A-2008/131924
- DE-A1- 1 575 505
- DE-A1- 4 227 662
- DE-B- 1 039 315
- DE-C- 356 545
- DE-C- 821 447
- DE-C- 874 683
- DE-U1- 7 935 982
- GB-A- 1 154 797
- GB-A- 1 296 976
- JP-A- 6 117 440
- US-A- 1 147 497
- US-A- 1 611 976
- US-A- 3 284 146

## Beschreibung

Beispielsweise aus der DE 79 35 982 U1 ist ein Wälzlagerkäfig bekannt, der aus zwei Seitenteilen und einer Vielzahl von getrennt gefertigten und durch Schweißen oder dgl. mit den Seitenteilen verbundenen Stegteilen besteht, wobei die Stegteile zwischen sich Taschen zur Aufnahme der Wälzkörper bilden. Dabei sind die Seiten- und Stegteile aus flach- oder profilgewalztem Draht gefertigt und die Stegteile zur Bildung von Anlaufflächen für die Wälzkörper angeprägt.

Aus der US 1 611 976 A ist ein Zylinderrollenlager bekannt, bei dem die Rollen an beiden Stirnenden mit Zapfen ausgebildet sind, die in zwei, jeweils aus wenigstens zwei Sektorelementen zusammengesetzten Endringen gelagert sind, wobei die beiden Endringe über, die Rollen nicht berührende Stegelemente verbunden sind.

Aus der GB 1 154 797 A ist ein Fensterkäfig eines Zylinderrollenlagers bekannt, dessen Seitenringe aus Sektorelementen zusammengesetzt sind, an denen einstückig und materialeinheitlich die Käfigstege angeformt sind.

Aus der US 3 284 146 A ist ebenfalls ein Fensterkäfig eines Rollenlagers bekannt, der aus doppel-T-förmigen Elementen oder aus rahmenartigen Elementen, die eine oder mehrere Käfigtaschen ausbilden, zusammengesetzt ist.

Eine Aufgabe der vorliegenden Erfindung ist es, einen verbesserten Wälzlagerkäfig zu schaffen, der insbesondere einfach und damit kostengünstig herstellbar ist.

Die Aufgabe wird durch den Gegenstand des Anspruchs 1 gelöst. Vorteilhafte Ausgestaltungen sind in den Unteransprüchen beschrieben.

Dadurch sind mit Vorteil die Sektorelemente beispielsweise einfach und kostengünstig durch Ablängen von einem entsprechend profilierten Stangen- oder Bandmaterial bevorzugt aus Stahl herstellbar. Natürlich bietet dabei auch der Wälzlagerkäfig gemäß der vorliegenden Erfindung gegenüber Wälzlagerkäfigen, die aus einem hohlzylinderartigen Rohling herausgearbeitet werden, den Vorteil, dass kein Materialabfall durch ein Herausarbeiten insbesondere der Käfigtaschen entsteht und sich somit mit Vorteil eine Materialeinsparung gegenüber derartigen Verfahren ergibt.

In einer vorteilhaften Ausgestaltung sind auch die Stegelemente gleichartig ausgebildet, so dass auch diese in einfacher und kostengünstiger Weise durch ein Ablängen von einem entsprechend profilierten Stangen- oder Bandmaterial bevorzugt aus Stahl herstellbar sind.

Weiterhin liegt Gegenständen von Unteransprüchen die Erkenntnis zugrunde, dass auch bei einem aus Stahl ausgebildeten Käfig Einschnappmöglichkeiten für die Wälzkörper realisierbar sind, wie sie sonst nur bei Messing- und/oder Kunststoffkäfigen bekannt sind.

In einer vorteilhaften Ausgestaltung sind das Umfangselement einerseits und die Stegelemente andererseits mit unterschiedlichen Eigenschaften ausgebildet. Damit ist es mit Vorteil möglich, verschiedene Werkstoffe zu paaren und beispielsweise je nach Anwendungsfall weniger belastete Elemente aus kostengünstigerem Material herzustellen. Weiterhin ist es auch möglich, eines der Elemente für eine hohe Verschleißfestigkeit aus einem wärmebehandelten Stahl auszubilden und andere Elemente, beispielsweise für eine hohe Zähigkeit, unbehandelt zu lassen.

In einer weiteren vorteilhaften Ausgestaltung ist es möglich, wenigstens eines der Elemente beschichtet auszubilden. Dabei ist es aufgrund der Zusammensetzung des Wälzlagerkäfigs aus Sektorelementen und Stegelementen sehr viel einfacher und damit auch kostengünstiger nur die Beschichtung von einzelnen Elementen, beispielsweise den Stegelementen, vorzunehmen. Entsprechendes gilt für eine weitere vorteilhafte Ausgestaltung, bei der an den den Wälzkörpern zugewandten Flächen der Stegelemente beispielsweise tropfenförmig eingebrachte Prägungen in der Funktion als Schmiertaschen vorgesehen sind. Dabei können die Schmiertaschen in einer Ausbildungsform in einer linken axialen Hälfte des Stegelements schräg gemäß einer vom rechten Wälzlagerkäfigbereich schräg hin zum Wälzlagermittelpunkt hin verlaufenden Linie angeordnet und in der rechten Hälfte entsprechend spiegelbildlich ausgebildet sein.

Weitere Vorteile, Merkmale und Einzelheiten der Erfindung ergeben sich aus den im Folgenden beschriebenen Ausführungsbeispielen der Erfindung anhand der Figuren. Dabei zeigen:
- Figur 1: in perspektivischer Ansicht einen aus Elementen zusammengesetzten Zylinderrollenlagerkäfig,
- Figur 2A: in perspektivischer Ansicht einen weiteren aus Elementen zusammengesetzten Zylinderrollenlagerkäfig,
- Figur 2B: in perspektivischer Ansicht einen weiteren aus Elementen zusammengesetzten Zylinderrollenlagerkäfig,
- Figur 3: einen Querschnitt durch eine Tasche eines Käfigs ähnlich dem der Figur 1 mit einer Einschnappfunktionalität für die Wälzkörper aufgrund einer speziellen Beabstandung von Stegelementen,
- Figur 4: in perspektivischer Ansicht einen Umfangsabschnitt eines Käfigs ähnlich dem der Figur 1 mit einer Einschnappfunktionalität für die Wälzkörper aufgrund spezieller Ausbildung der Stegelemente,
- Figur 5: in perspektivischer Ansicht eine Tasche eines Käfigs ähnlich dem der Figur 1 mit einer Einschnappfunktionalität für die Wälzkörper aufgrund von Nasen an den Umfangselementen,
- Figur 6: in perspektivischer Ansicht eine Tasche eines Käfigs ähnlich dem der Figur 1 mit einer Haltefunktion für die Wälzkörper aufgrund von Nasen an den Umfangselementen,
- Figur 7: in perspektivischer Ansicht eine Tasche eines Käfigs ähnlich dem der Figur 1 mit zu den Stegelementen parallelen Stiften, und
- Figur 8: in perspektivischer Ansicht und in zwei entgegengesetzten Betrachtungsrichtungen eine Tasche eines aus Elementen zusammengesetzten Zylinderrollenlagerkäfigs, bei dem die Elemente durch Sprengringe zusammengehalten sind.

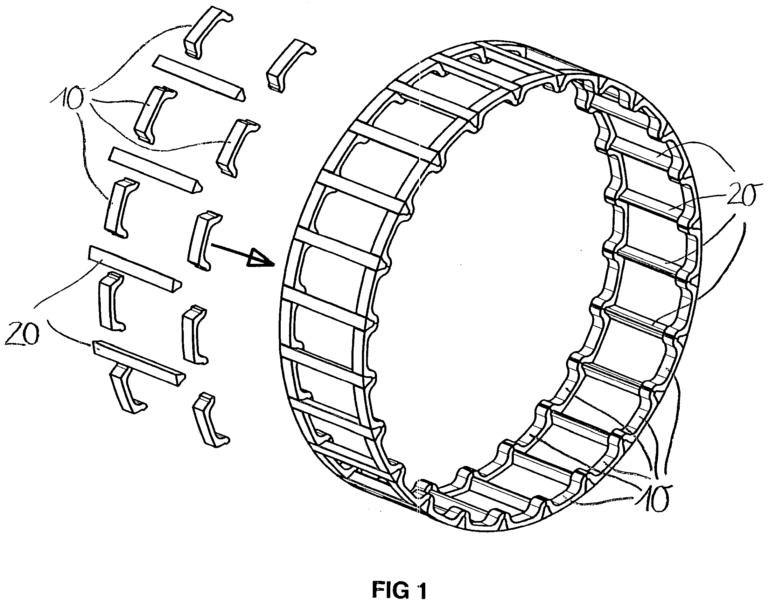

Die Figur 1 zeigt als ein Ausführungsbeispiel der Erfindung einen aus Elementen 10 und 20 zusammengesetzten Zylinderrollenlagerkäfig. Der Zylinderrollenlagerkäfig umfasst dabei an seinen beiden axialen Enden je ein ringartiges Umfangselement und eine Vielzahl, die beiden Umfangselemente miteinander verbindende Stegelemente 20. Der linke Bereich der Figur 1 zeigt dabei explosionszeichnungsartig, dass die beiden ringartigen Umfangselemente durch eine Vielzahl von gleichartigen Sektorelementen 10 gebildet sind, die zu den ringartigen Umfangselementen zusammengesetzt sind. Dabei sind die Sektorelemente 10 einfach und kostengünstig durch Ablängen von einem entsprechend profilierten Stangen- oder Bandmaterial aus Stahl hergestellt.

Auch die Stegelemente 20 sind in einfacher und kostengünstiger Weise durch ein Ablängen von einem entsprechend profilierten Stangen- oder Bandmaterial aus Stahl hergestellt. Dabei sind insbesondere die dem Außenmantel der Zylinderrollen zum Gegenüberliegen vorgesehenen Seitenflächen der Stegelemente 20 entsprechend dem Rollenaußenmantel bogenartig ausgebildet, was mit besonderem Vorteil den Schmierfilmaufbau begünstigt.

Die Sektorelemente 10 sind an ihren Verbindungsstellen derart ausgebildet, dass sich an der Verbindungsstelle in radialer Richtung eine V-förmige Einbauchung ergibt, in die hinein passend die axialen Enden der Stegelemente 20 zum Einsetzen vorgesehen sind, so dass die Positionen der Stegelemente 10 an den Umfangselementen in Umfangsrichtung vorbestimmt sind. Die einzelnen Elemente 10 und 20 sind untereinander dann stoffschlüssig, insbesondere durch ein Schweißen miteinander verbunden. Dieses Verschweißen kann beispielsweise mit einem Laser-, Elektronen- oder Plasma-Verfahren erfolgen. In anderen Ausführungsformen können die Elemente 10 und 20 auch miteinander verlötet, beispielsweise durch ein induktives Hartlöten oder Laserhartlöten, oder auch miteinander verklebt sein.

Dabei bildet jedes der Sektorelemente 10 in den Bereichen, in dem es mit den beiden benachbarten Sektorelementen 10 verbunden ist, eine potentielle Anlauffläche für eine Rollenstirnseite, die bezüglich der übrigen Stirnfläche des Sektorelements 10 radial weiter innen angeordnet ist, so dass sich in radialer Richtung gesehen für die Rollenstirnseite eine radial möglichst weit erstreckende potentielle Anlauffläche ergibt, was mit besonderem Vorteil einen zusätzlichen Verkippschutz für die Zylinderrollen darstellt. Diese größere radiale Erstreckung wenigstens in Bereichen der Umfangselemente ist mit dem aus Elementen 10 und 20 zusammengesetzten Käfig mit besonderem Vorteil unabhängig von der radialen Dicke der Stegelemente 20 erzielbar. Damit ist mit Vorteil auch eine vergleichsweise große Anbindefläche für die axialen Enden der Stegelemente 20 an den Sektorelementen 10 erzielbar.

Beim Zylinderrollenlagerkäfig der Figur 1 können die einzelnen Elemente 10 und 20 zunächst miteinander verbunden werden und dann der Käfig durch Einsetzen von Rollen zu einem entsprechenden Zylinderrollenlager zusammengebaut werden. Es ist aber auch möglich, insbesondere in Verbindung mit einem Laufbahnelement, mit Borden an beiden Enden der Zylinderrollenstirnseiten, die Elemente 10 und 20 um die in besagtes Laufbahnelement eingelegten Rollen anzuordnen und dann zu verbinden, so dass das Laufbahnelement mit den Zylinderrollen und dem Käfig eine in sich verliersichere Einheit bildet.

In wiederum anderen Ausführungen ist eine Ausbildung der Elemente 10 und 20 auch aus anderen Materialien, beispielsweise anderen metallischen Legierungen, aber auch Kunststoffen, und deren Herstellung durch Sintern und/oder Spritzgießen möglich. Weiterhin kann auch ein Kegelrollenlagerkäfig vergleichbar dem vorausgehend beschriebenen Zylinderrollenlagerkäfig ausgebildet sein, wobei sich dabei lediglich die beiden Umfangselemente in ihrem Durchmesser unterscheiden und somit zwei Arten von Sektorelementen vorzusehen sind.

Dadurch, dass der Käfig der Figur 1 einen im Wesentlichen glatten Außenmantel aufweist, ist er insbesondere als ein, beispielsweise an einem entsprechend ausgebildeten, äußeren Laufbahnelement schultergeführter Käfig einsetzbar. Dabei sind mit besonderem Vorteil die Stegelemente 20 radial nach außen hin dann durch die Schulter des äußeren Laufbahnelements zusätzlich, sozusagen mechanisch gesichert, wohingegen die Stegelemente 20 radial nach innen hin durch die aus den Sektorelementen 10 zusammengesetzten Umfangselemente gehalten sind.

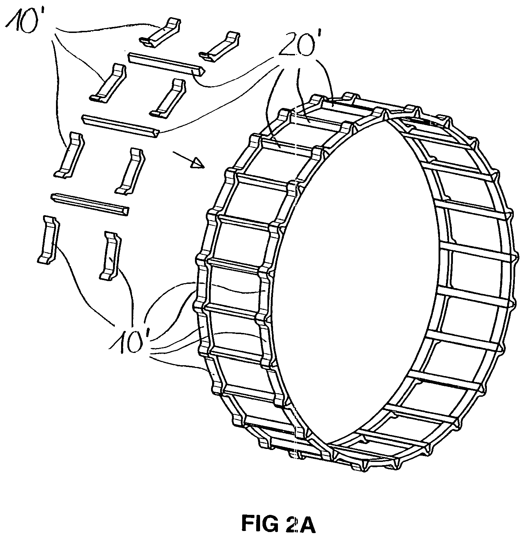

Zum Erzeugen eines entsprechenden, an einem entsprechend ausgebildeten inneren Laufbahnelement schulterführbaren Käfigs sind lediglich andere Sektorelemente 10' zu verwenden, wie dies in der Figur 2A dargestellt ist. Dabei sind nunmehr die Stegelemente 20' radial nach innen hin durch die wenigstens eine Schulter des inneren Laufbahnelements gesichert und werden radial nach außen hin durch die aus den Sektorelementen 10' zusammengesetzten Umfangselemente gehalten. Bei der Figur 2A weist nunmehr der aus den Sektorelementen 10' und den Stegelementen 20' zusammengesetzte Zylinderrollenlagerkäfig einen im Wesentlichen glatten Innenmantel auf.

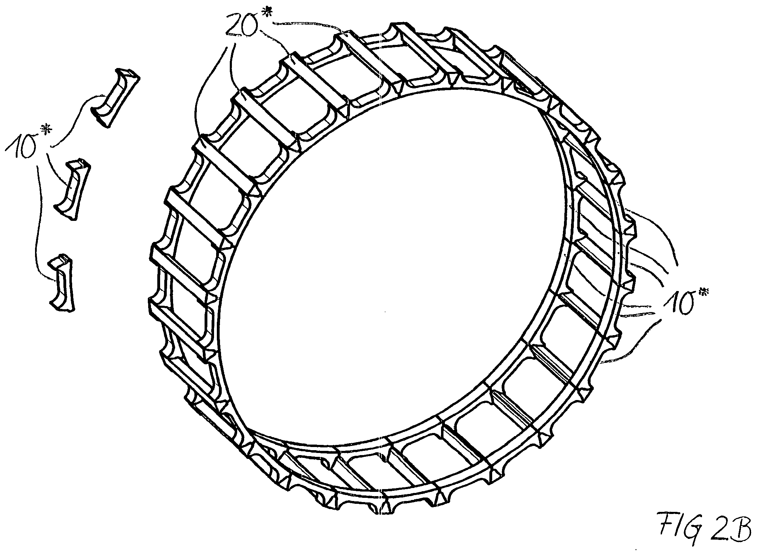

Die Figur 2B zeigt als ein weiteres Ausführungsbeispiel der Erfindung einen aus Sektorelementen 10* und Stegelementen 20* zusammengesetzten Zylinderrollenlagerkäfig, der sich von dem der Figur 2A im Wesentlichen dadurch unterscheidet, dass die Stegelemente 20* radial nach außen lediglich durch ihre stoffschlüssige Verbindung mit den Sektorelementen 10* gehalten sind, was aber je nach Anwendungsfall vollkommen ausreichend sein kann. Ansonsten gilt das vorausgehend Beschriebene für die Figuren 2A und 2B entsprechend. In anderen Ausführungsformen können die Käfige anstatt einer reinen Innen- oder Außenschulterführung natürlich auch für eine kombinierte Innen- und Außenführung, eine reine Rollenführung, andere Führungsarten wie eine Laufbahnführung und/oder Kombinationen daraus ausgebildet sein.

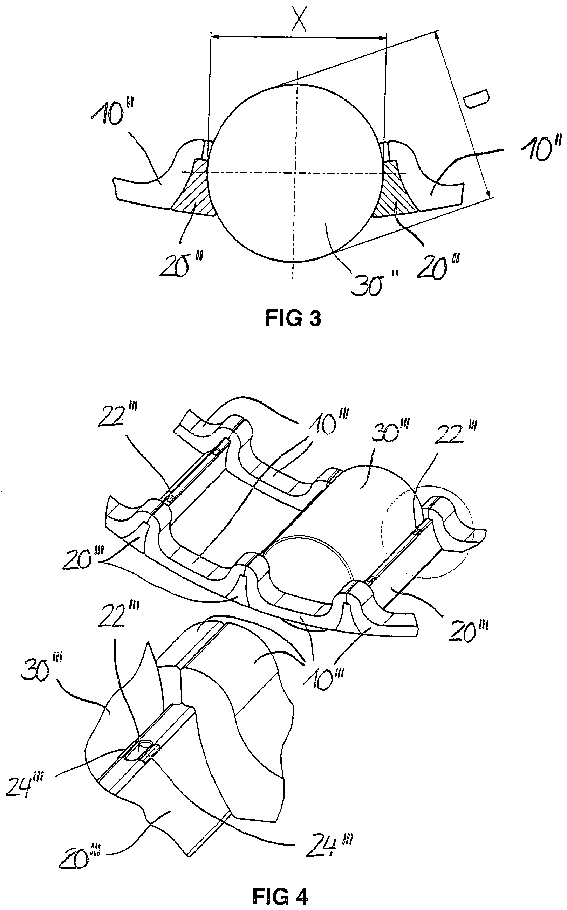

Die Figur 3 zeigt als ein weiteres Ausführungsbeispiel der Erfindung einen Querschnitt durch eine Tasche eines Käfigs ähnlich dem der Figur 1. Dabei ist der Käfig der Figur 3 derart ausgebildet, dass die die Tasche begrenzenden Stegelemente 20" zueinander eine Öffnungsbreite X aufweisen, die in etwa 3/10 mm geringer als der Durchmesser D der Zylinderrolle 30" ist. Damit können die Zylinderrollen 30" in den aus den Sektorelementen 10" und den Stegelementen 20" zusammengesetzten Käfig eingeschnappt werden, wobei der Käfig mit darin eingeschnappten Rollen 30" eine in sich verliersichere Transporteinheit darstellt, aber die Rollen 30" auch wieder durch einfaches Ausschnappen demontierbar sind. Dabei ist es mit besonderem Vorteil möglich, auch bei Verwendung von Stahlmaterial für die Elemente besagte Einschnappfunktion zu erzeugen. Ansonsten gilt das vorausgehend Beschriebene entsprechend.

Die Figur 4 zeigt als ein weiteres Ausführungsbeispiel der Erfindung in perspektivischer Ansicht Taschen eines Käfigs ähnlich dem der Figur 1 zum Realisieren einer Einschnappmöglichkeit für Zylinderrollen 30'''. Dazu sind an der schmalen, radial inneren Seitenfläche der Stegelemente 20''', an zwei Stellen entlang ihrer axialen Ausdehnung, in radialer Richtung Einprägungen 22''' eingebracht, so dass sich beiderseits der Einprägungen 22''' in Umfangsrichtung nasenartige Ausbauchungen 24''' ergeben, die für die Zylinderrolle 30''' besagte Einschnappfunktion erzeugen. Der untere Teil der Figur 4 zeigt dabei eine Ausschnittsvergrößerung des im oberen Teil der Figur 4 mit einem Kreis gekennzeichneten Bereichs. Ansonsten gilt das vorausgehend Beschriebene entsprechend.

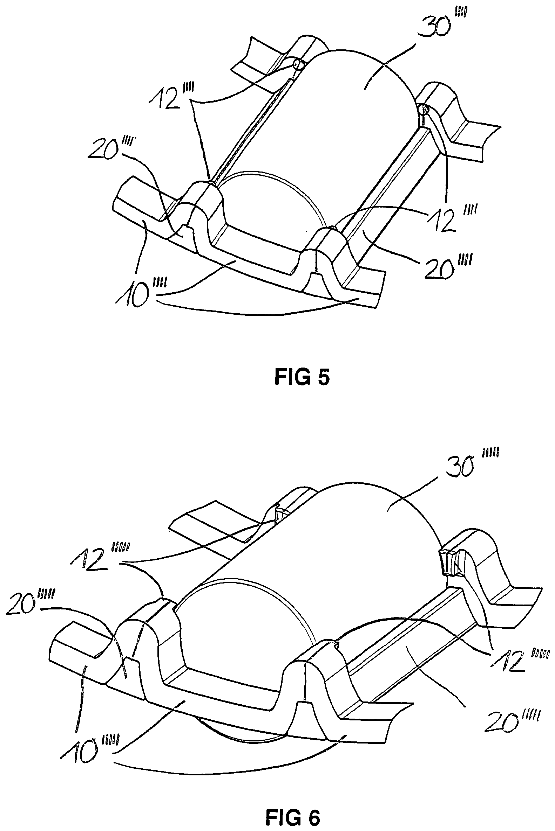

Die Figur 5 zeigt als ein weiteres Ausführungsbeispiel der Erfindung in perspektivischer Ansicht eine Tasche eines Käfigs ähnlich dem der Figur 1 mit darin eingesetzter Zylinderrolle 30"". Dabei sind zur Realisierung einer Einschnappfunktion für die Zylinderrolle 30'''' in der Tasche an den nach innen hin gerichteten Stirnseiten benachbarter Sektorelemente 10'''' in deren Verbindungsbereich axial nach innen hin auskragende zylinderartige Nasen 12'''' vorgesehen. Ansonsten gilt das vorausgehend Beschriebene entsprechend.

Die Figur 6 zeigt als ein weiteres Ausführungsbeispiel der Erfindung in perspektivischer Ansicht eine Tasche eines Käfigs ähnlich dem der Figur 1 mit darin eingesetzter Zylinderrolle 30'''''. Dabei sind ähnlich der Figur 5 bei der Figur 6 Nasen 12''''' vorgesehen, die aber eine entsprechend an die Zylinderrollenform angepasste Geometrie aufweisen. Dabei können insbesondere bei den Ausführungsformen der Figuren 5 und 6 die Nasen 12'''' und 12''''' auch derart ausgebildet sein, dass ein Ein- und Ausschnappen der Zylinderrollen 30'''' und 30''''' nicht mehr möglich ist, so dass ein Verbinden der Sektorelemente 10'''' bzw. 10''''' und Stegelemente 20'''' bzw. 20""' mit darin eingesetzten Zylinderrollen 30'''' bzw. 30''''' erfolgt.

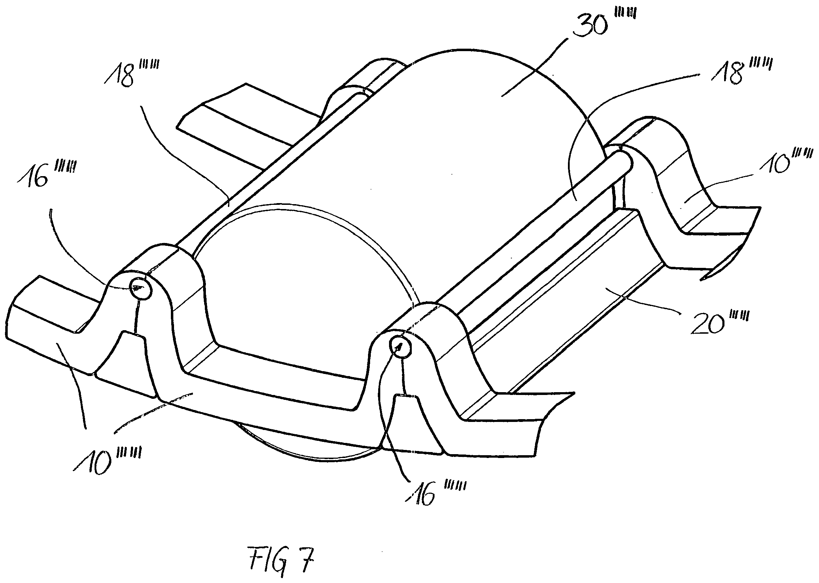

Die Figur 7 zeigt als ein weiteres Ausführungsbeispiel der Erfindung in perspektivischer Ansicht eine Tasche eines Käfigs ähnlich dem der Figur 1 mit darin eingesetzter Zylinderrolle 30''''''. Dabei sind die Sektorelemente 10'''''' in ihrem Verbindungsbereich derart ausgebildet, dass benachbarte Sektorelemente 10'''''' axiale Durchdringungen 16'''''' bilden. Dabei werden durch die axialen Durchdringungen 16'''''' nach dem Einsetzen der Zylinderrolle 30'''''' in die Käfigtasche Stifte 18'''''' eingeschoben und befestigt, so dass für die in der Tasche eingesetzte Zylinderrolle 30'''''' eine weitere Führungsfläche für den Zylinderrollenmantel entsteht und somit mit besonderem Vorteil einem Schränken der Zylinderrolle 30'''''' entgegengewirkt ist.

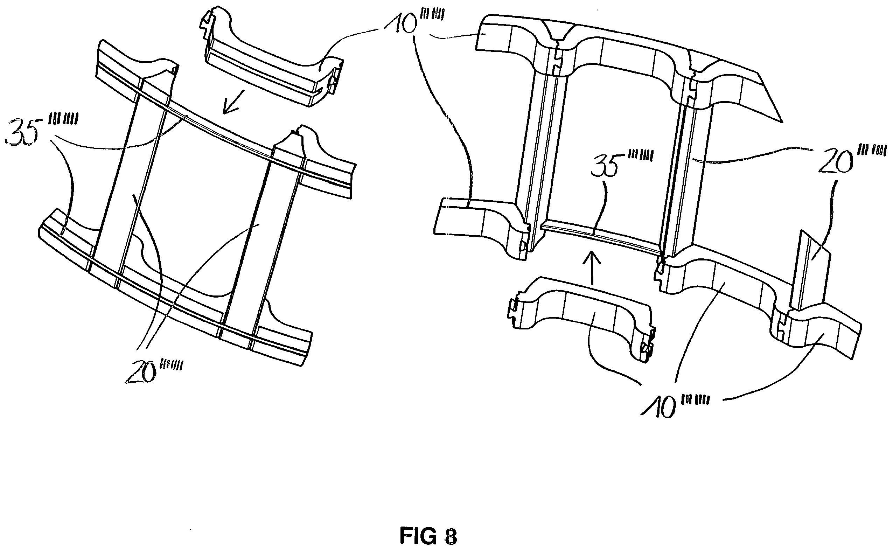

Die Figur 8 zeigt als ein weiteres Ausführungsbeispiel der Erfindung in perspektivischer Ansicht und in zwei entgegengesetzten Betrachtungsrichtungen eine Tasche eines aus Stegelementen 20''''''' und Sektorelementen 10''''''' zusammengesetzten Käfigs. Anders als bei den vorausgehenden Ausführungsbeispielen sind bei diesem Käfig die Elemente 10''''''' und 20''''''' nicht stoffschlüssig miteinander verbunden, sondern werden durch zwei Sprengringe 35''''''' zusammengehalten, die formschlüssig in entsprechende an den Elementen 10''''''' und 20''''''' ausgebildete Nuten eingelegt sind. Weiterhin sind die Sektorelemente 10''''''' miteinander verklipsbar ausgebildet. Ein derartiger Käfig ist mit besonderem Vorteil einfach montierbar, aber auch wieder demontierbar. In anderen Ausführungsformen können anstatt der Sprengringe 35''''''' natürlich auch andere ringartige Halteelemente zum Einsatz kommen.

## Patentansprüche

1. Wälzlagerkäfig eines Wälzlagers, beinhaltend folgende Merkmale:
- Der Käfig umfasst ein ringartiges Umfangselement von dem Stegelemente (20, 20*, 20', 20", 20''', 20'''', 20''''', 20'''''', 20''''''') abzweigen, zwischen denen Wälzkörper (30''', 30'''', 30''''', 30'''''') des Wälzlagers anordenbar sind,
- die Stegelemente (20, 20*, 20', 20", 20''', 20'''', 20'''', 20'''''', 20''''''') sind mit zum Berühren der Wälzkörper (30''', 30'''', 30''''', 30'''''') vorgesehenen Führungsflächen für den Wälzkörpermantel ausgebildet,
- das Umfangselement umfasst eine Mehrzahl gleichartiger Sektorelemente (10, 10*, 10', 10", 10''', 10'''', 10''''', 10'''''', 10'''''''),
- entsprechend der Anzahl von Wälzkörpern (30''', 30'''', 30''''', 30'''''') sind Stegelemente (20, 20*, 20', 20", 20''', 20'''', 20'''', 20'''''', 20''''''' ) und Sektorelemente (10, 10*, 10', 10", 10''', 10'''', 10''''', 10'''''', 10''''''') vorgesehen,
- der Käfig ist aus den Sektorelementen (10, 10*, 10', 10", 10''', 10'''', 10''''', 10'''''', 10''''''') und den Stegelementen (20, 20*, 20', 20", 20''', 20'''', 20'''', 20'''''', 20''''''') zusammengesetzt, und
- die zunächst losen Sektor- und Stegelemente (10, 10*, 10', 10", 10''', 10'''', 10''''', 10'''''', 10''''''', 20, 20*, 20', 20", 20''', 20'''', 20'''', 20'''''', 20''''''') sind zum Bilden des Käfigs miteinander verbunden.

2. Wälzlagerkäfig nach Anspruch 1, wobei die Elemente (10, 10*, 10', 10", 10''', 10'''', 10''''', 10'''''', 10''''''', 20, 20*, 20', 20", 20''', 20'''', 20''''', 20'''''', 20''''''') einen Eisenwerkstoff, insbesondere einen Stahl, und das Verbinden ein Verschweißen umfassen.

3. Wälzlagerkäfig nach einem der Ansprüche 1 oder 2, wobei das Umfangselement aus den Sektorelementen (10, 10*, 10', 10", 10''', 10'''', 10''''', 10'''''', 10''''''') gebildet ist, und/oder wobei die Sektorelemente (10''''''') ineinander einschnappbar ausgebildet sind.

4. Wälzlagerkäfig nach einem der Ansprüche 1 bis 3, wobei die Stegelemente (20, 20*, 20', 20", 20''', 20'''', 20'''', 20'''''', 20''''''') gleichartig ausgebildet sind.

5. Wälzlagerkäfig nach einem der Ansprüche 1 bis 4, wobei die Sektorelemente (10, 10*, 10', 10", 10''', 10'''', 10''''', 10'''''', 10''''''') und/oder die Stegelemente (20, 20*, 20', 20", 20''', 20'''', 20'''', 20'''''', 20''''''') von einem entsprechend profilierten Stangen- oder Bandmaterial abgelängt sind.

6. Wälzlagerkäfig nach einem der Ansprüche 1 bis 5, wobei die Sektorelemente (10, 10*, 10', 10", 10''', 10'''', 10''''', 10'''''', 10''''''') an ihren Verbindungsstellen derart ausgebildet sind, dass sich an der Verbindungsstelle eine Einbauchung ergibt, die zum darin Einsetzen eines Endes eines der Stegelemente (20, 20*, 20', 20", 20''', 20'''', 20'''', 20'''''', 20''''''') vorgesehen ist, und insbesondere die Einbauchung V-förmig, U-förmig oder trapezförmig mit geraden, konvexen oder konkaven Schenkeln der V-, U- oder Trapezform ausgebildet ist.

7. Wälzlagerkäfig nach einem der Ansprüche 1 bis 6, wobei der Käfig für ein Einschnappen der Wälzkörper (30''', 30'''', 30''''', 30'''''') in den Käfig derart ausgebildet ist, dass ein Abstand zwischen zwei benachbarten Stegelementen (20") auf der Seite, von der her die Rollen (30''') in den Käfig einzuschnappen sind, im Zehntel-Millimeter-Bereich kleiner als ein Durchmesser des Wälzkörpers (30''') gestaltet ist, wobei die Stegelemente (20''') für ein Einschnappen der Wälzkörper (30''') in den Käfig mit sich wenigstens hin zum Wälzkörper (30''') erstreckenden nasenartigen Ausbauchungen (24''') ausgebildet sind, wobei zwei benachbarte Sektorelemente (10'''', 10''''') in ihrem Verbindungsbereich eine sich wenigstens in Achsrichtung erstreckende Ausbauchung (12'''', 12''''') ausbildend gestaltet sind, und/oder wobei zwei benachbarte Sektorelemente (10'''''') in ihrem Verbindungsbereich eine Durchdringung (16'''''') ausbildend gestaltet sind, durch die hindurch in etwa parallel zum Stegelement (20'''''') ein stangenartiges Führungselement (18'''''') einsetzbar ist.

8. Wälzlagerkäfig nach einem der Ansprüche 1 bis 7, wobei eine Querschnittsfläche wenigstens eines Abschnitts eines der Stegelemente (20, 20*, 20', 20", 20''', 20'''', 20'''', 20'''''', 20''''''') trapezartig ist, und insbesondere die Seiten des Trapezes in Anpassung an den Wälzkörper (30''', 30'''', 30''''', 30'''''') bogenartig ausgebildet sind.

9. Wälzlagerkäfig nach einem der Ansprüche 1 bis 8, wobei das Verbinden ein Verlöten oder Verkleben umfasst.

10. Wälzlagerkäfig nach einem der Ansprüche 1 bis 9, wobei das Umfangselement in sich geschlossen oder offen ausgebildet ist, wobei an beiden axialen Enden der Stegelemente (20, 20*, 20', 20", 20''', 20'''', 20'''', 20'''''', 20''''''') jeweils ein ringartiges Umfangselement angeordnet ist, und/oder wobei sich axial an beide Stirnseiten des Umfangselements durch Stegelemente (20, 20*, 20', 20", 20''', 20'''', 20'''', 20'''''', 20''''''') ausgebildete, wenigstens U-förmig begrenzte Taschen anschließen.

11. Wälzlagerkäfig nach einem der Ansprüche 1 bis 10, wobei wenigstens eines der Stegelemente (20, 20*, 20', 20", 20''', 20'''', 20'''', 20'''''', 20''''''') an seinen zum Berühren der Wälzkörper (30''', 30'''', 30''''', 30'''''') vorgesehenen Flächen mit Schmiertaschen ausgebildet ist.

12. Wälzlagerkäfig nach einem der Ansprüche 1 bis 11, wobei das Umfangselement einerseits und die Stegelemente (20, 20*, 20', 20", 20''', 20'''', 20'''', 20'''''', 20''''''') andererseits mit unterschiedlichen Eigenschaften ausgebildet sind, und/oder wobei wenigstens eines der Elemente (10, 10*, 10', 10", 10''', 10'''', 10''''', 10'''''', 10''''''', 20, 20*, 20', 20", 20''', 20'''', 20'''', 20'''''', 20''''''') wenigstens in Teilbereichen beschichtet ausgebildet ist.

13. Wälzlagerkäfig nach einem der Ansprüche 1 bis 12, wobei der Wälzlagerkäfig als ein Rollenlagerkäfig, insbesondere für ein Zylinder-, Kegel- oder Pendelrollenlager ausgebildet ist.

14. Wälzlagerkäfig nach einem der Ansprüche 1 bis 13 , wobei die Elemente (10''''''', 20''''''') dadurch zusammengehalten sind, dass die Elemente (10''''''', 20''''''') im Bereich des Umfangselements mit einer radial umlaufenden Nut ausgebildet sind, in die ein ringartiges Halteelement (35''''''') eingelegt ist.

## Claims

1. Rolling bearing cage of a rolling bearing, having the following features:
- the cage comprises a ring-like circumferential element from which web elements (20, 20*, 20', 20", 20''', 20'''', 20''''', 20'''''', 20''''''') branch off, between which web elements rolling bodies (30''', 30'''', 30''''', 30'''''') of the rolling bearing can be arranged,
- the web elements (20, 20*, 20', 20", 20''', 20'''', 20''''', 20'''''', 20''''''') are configured with guide surfaces for the rolling body shell, said guide surfaces being provided for making contact with the rolling bodies (30''', 30'''', 30''''', 30''''''),
- the circumferential element comprises a plurality of identical sector elements (10, 10*, 10', 10", 10''', 10'''', 10''''', 10'''''', 10'''''''),
- web elements (20, 20*, 20', 20", 20''', 20'''', 20''''', 20'''''', 20''''''') and sector elements (10, 10*, 10', 10", 10''', 10'''', 10''''', 10'''''', 1'''''') are provided correspondingly to the number of rolling bodies (30''', 30'''', 30''''', 30''''''),
- the cage is composed of the sector elements (10, 10*, 10', 10", 10''', 10'''', 10''''', 10'''''', 10''''''') and the web elements (20, 20*, 20', 20", 20''', 20'''', 20''''', 20'''''', 20'''''''), and
- the initially loose sector and web elements (10, 10*, 10', 10", 10''', 10'''', 10''''', 10'''''', 10''''''', 20, 20*, 20', 20'', 20''', 20'''', 20''''', 20'''''''''''20''''''') are connected to one another in order to form the cage.

2. Rolling bearing cage according to Claim 1, wherein the elements (10, 10*, 10', 10", 10''', 10'''', 10''''', 10'''''', 10''''''', 20, 20*, 20', 20'', 20''', 20'''', 20''''', 20'''''', 20''''''') comprise a ferrous material, in particular a steel, and the connection involves welding.

3. Rolling bearing cage according to either of Claims 1 and 2, wherein the circumferential element is formed of the sector elements (10, 10*, 10', 10", 10''', 10'''', 10''''', 10'''''', 10''''''), and/or wherein the sector elements (10''''''') are configured to be able to be snapped into one another.

4. Rolling bearing cage according to one of Claims 1 to 3, wherein the web elements (20, 20*, 20', 20", 20''', 20'''', 20''''', 20'''''', 20''''''') are of identical configuration.

5. Rolling bearing cage according to one of Claims 1 to 4, wherein the sector elements (10, 10*, 10', 10", 10''',10'''', 10''''', 10'''''', 10''''''') and/or the web elements (20, 20*, 20', 20", 20''', 20'''', 20''''', 20'''''', , 20''''''') are cut to length from a correspondingly profiled bar or strip material.

6. Rolling bearing cage according to one of Claims 1 to 5, wherein the sector elements (10, 10*, 10', 10", 10''', 10'''', 10''''', 10'''''', 10''''''') are configured, at the connecting points thereof, in such a way that an indentation is produced at the connecting point, said indentation being provided for an end of one of the web elements (20, 20*, 20', 20", 20''', 20'''', 20''''', 20'''''', 20''''''') to be inserted therein, and in particular the indentation is of V-shaped, U-shaped or trapezoidal configuration with straight, convex or concave limbs of the V shape, U shape or trapezium.

7. Rolling bearing cage according to one of Claims 1 to 6, wherein, for the snapping of the rolling bodies (30''', 30'''', 30''''', 30'''''') into the cage, the cage is configured in such a way that a spacing between two adjacent web elements (20") on the side from which the rollers (30''') can be snapped into the cage is designed to be a few tenths of a millimetre smaller than a diameter of the rolling body (30'''), wherein, for the snapping of the rolling bodies (30''') into the cage, the web elements (20''') are configured with lug-like bulges (24''') which extend at least towards the rolling body (30'''), wherein two adjacent sector elements (10'''', 10''''') are designed, in the connecting region thereof, to form a bulge (12'''', 12''''' which extends at least in an axial direction, and/or wherein two adjacent sector elements (10'''''') are designed, in the connecting region thereof, to form a through-hole (16''''''), through which a bar-like guide element (18'''''') can be inserted approximately parallel to the web element (20'''''').

8. Rolling bearing cage according to one of Claims 1 to 7, wherein a cross-sectional area of at least one portion of one of the web elements (20, 20*, 20', 20", 20''', 20'''', 20''''', 20'''''', 20''''''') is trapezoidal, and in particular the sides of the trapezium are configured in an arcuate manner in adaptation to the rolling body (30''', 30'''', 30''''', 30'''''').

9. Rolling bearing cage according to one of Claims 1 to 8, wherein the connection involves soldering or adhesive bonding.

10. Rolling bearing cage according to one of Claims 1 to 9, wherein the circumferential element is configured to be self-contained or open, wherein a respective ring-like circumferential element is arranged at the two axial ends of the web elements (20, 20*, 20', 20", 20''', 20'''', 20''''', 20'''''', 20'''''''), and/or wherein the two end sides of the circumferential element are axially adjoined by pockets which are formed by web elements (20, 20*, 20', 20", 20''', 20'''', 20''''', 20'''''', 20''''''') and which are delimited in an at least U-shaped manner.

11. Rolling bearing cage according to one of Claims 1 to 10, wherein at least one of the web elements (20, 20*, 20', 20'', 20''', 20'''', 20''''', 20'''''', 20''''''') is configured with lubricating pockets on those surfaces thereof which are provided for making contact with the rolling bodies (30''', 30'''', 30''''', 30'''''').

12. Rolling bearing cage according to one of Claims 1 to 11, wherein the circumferential element, on the one hand, and the web elements (20, 20*, 20', 20", 20''', 20'''', 20''''', 20'''''', 20'''''''), on the other hand, are configured with different properties, and/or wherein at least one of the elements (10, 10*, 10', 10", 10''', 10'''', 10''''', 10'''''', 10''''''', 20, 20*, 20', 20", 20''', 20'''', 20''''', 20'''''', 20''''''') is configured with a coating at least in partial regions.

13. Rolling bearing cage according to one of Claims 1 to 12, wherein the rolling bearing cage is configured in the form of a roller bearing cage, in particular for a cylinder roller bearing, tapered roller bearing or spherical roller bearing.

14. Rolling bearing cage according to one of Claims 1 to 13, wherein the elements (10''''''', 20''''''') are held together in that the elements (10''''''',20''''''') are configured with a radially peripheral groove in the region of the circumferential element, a ring-like retaining element (35''''''') being inserted into said groove.

## Revendications

1. Cage d'un palier à roulement, ladite cage contenant les éléments caractéristiques suivants :
- la cage comprend un élément périphérique annulaire duquel dérivent des éléments formant nervure (20, 20*, 20', 20", 20''', 20'''', 20''''', 20'''''', 20''''''') entre lesquels des éléments roulants (30''', 30'''', 30''''', 30'''''') du palier à roulement peuvent être disposés,
- les éléments formant nervure (20, 20*, 20', 20", 20''', 20'''', 20''''', 20''''''20''''''') sont conçus avec des surfaces de guidage prévues pour contacter les éléments roulants (30''', 30'''', 30''''', 30'''''') et destinées à l'enveloppe d'élément roulant,
- l'élément périphérique comprend une pluralité d'éléments formant secteur similaires (10, 10*, 10', 10", 10''', 10'''', 10''''', 10'''''', 10'''''''),
- des éléments formant nervure (20, 20*, 20', 20", 20''', 20'''', 20''''', 20'''''', 20''''''') et des éléments formant secteur (10, 10*, 10', 10", 10''', 10'''', 10''''', 10'''''', 10''''''') sont prévus en fonction du nombre d'éléments roulants (30''', 30'''', 30''''', 30''''''),
- la cage est composée des éléments formant secteur (10, 10*, 10', 10", 10''', 10'''', 10''''', 10'''''', 10''''''') et des éléments formant nervure (20, 20*, 20', 20", 20''', 20'''', 20''''', 20'''''', 20'''''''), et
- les éléments formant secteur et formant nervure (10, 10*, 10', 10", 10''', 10'''', 10''''', 10'''''', 10''''''', 20, 20*, 20', 20", 20''', 20'''', 20''''', 20'''''', 20''''''') sont reliés entre eux pour former la cage.

2. Cage de palier à roulement selon la revendication 1, les éléments (10, 10*, 10', 10", 10''', 10'''', 10''''', 10'''''', 10''''''', 20, 20*, 20', 20", 20''', 20'''', 20''''', 20'''''', 20''''''') comprennent un matériau ferreux, en particulier un acier, et la liaison comprend le soudage.

3. Cage de palier à roulement selon l'une des revendications 1 ou 2, l'élément périphérique étant formé d'éléments formant secteur (10, 10*, 10', 10", 10''', 10'''', 10''''', 10''''''', 10'''''''), et/ou les éléments formant secteur (10''''''') étant conçus de manière encliquetable les uns dans les autres.

4. Cage de palier à roulement selon l'une des revendications 1 à 3, les éléments formant nervure (20, 20*, 20', 20", 20''', 20'''', 20''''', 20'''''', 20''''''') sont conçus de la même manière.

5. Cage de palier à roulement selon l'une des revendications 1 à 4, les éléments formant secteur (10, 10*, 10', 10", 10''', 10'''', 10''''', 10'''''', 10''''''') et/ou les éléments formant nervure (20, 20*, 20', 20", 20''', 20'''', 20''''', 20'''''', 20''''''') étant coupés à la longueur par un matériau en forme de bande ou de barre profilé de manière appropriée.

6. Cage de palier à roulement selon l'une des revendications 1 à 5, les éléments formant secteur (10, 10*, 10', 10", 10''', 10'''', 10''''', 10'''''', 10''''''') étant conçus au niveau de leurs points de liaison de façon à obtenir au niveau du point de liaison une indentation qui est prévue pour recevoir à l'intérieur une extrémité de l'un des éléments formant nervure (20, 20*, 20', 20", 20''', 20'''', 20''''', 20'''''', 20''''''') et en particulier l'indentation étant conçue en forme de V, de U ou de trapèze pourvus de branches droites, convexes ou concaves de la forme de V, de U ou de trapèze.

7. Cage de palier à roulement selon l'une des revendications 1 à 6, la cage étant conçue pour permettre l'encliquetage des éléments roulants (30''', 30'''', 30''''', 30'''''') dans la cage de façon à ménager entre deux éléments formant nervure (20") adjacents, du côté où les rouleaux (30''') doivent être encliquetés dans la cage, une distance qui est inférieure de l'ordre d'un dixième de millimètre au diamètre de l'élément roulant (30'''), les éléments formant nervure (20''') étant conçus avec des renflements (24''') en forme d'ergot, qui s'étendent au moins en direction de l'élément roulant (30'''), pour permettre l'encliquetage des éléments roulants (30''') dans la cage, deux éléments formant secteur (10"", 10''''') adjacents étant conçus pour former dans leur zone de liaison un renflement (12'''', 12''''') qui s'étend au moins dans la direction axiale, et/ou deux éléments formant secteur (10'''''') étant conçus pour former dans leur zone de liaison une pénétration (16'''''') permettant l'insertion d'un élément de guidage (18'''''') en forme de barre à peu près parallèlement à l'élément formant nervure (20'''''').

8. Cage de palier à roulement selon l'une des revendications 1 à 7, une surface en coupe transversale d'au moins une portion de l'un des éléments formant nervure (20, 20*, 20', 20", 20''', 20'''', 20''''', 20'''''', 20''''''') étant trapézoïdale, et en particulier les côtés du trapèze étant conçus pour être arqués afin de s'adapter aux éléments roulants (30''', 30"", 30''''', 30'''''') sont arqués.

9. Cage de palier à roulement selon l'une des revendications 1 à 8, la liaison comprenant le brasage ou le collage.

10. Cage de palier à roulement selon l'une des revendications 1 à 9, l'élément périphérique étant conçu pour être fermé ou ouvert en soi, un élément périphérique annulaire étant disposé à chacune des deux extrémités axiales des éléments formant nervure (20, 20*, 20', 20", 20''', 20'''', 20''''', 20'''''', 20''''''') et/ou au moins des poches en forme de U et formées par des éléments formant nervure (20, 20*, 20', 20", 20''', 20'''', 20''''', 20'''''', 20''''''') se raccordant axialement à deux côtés frontaux de l'élément périphérique.

11. Cage de palier à roulement selon l'une des revendications 1 à 10, l'un au moins des éléments formant nervure (20, 20*, 20', 20", 20''', 20'''', 20''''', 20'''''', 20''''''') étant formé avec des poches de lubrification sur ses surfaces prévues pour contacter les éléments roulants (30''', 30'''', 30''''', 30'''''').

12. Cage de palier à roulement selon l'une des revendications 1 à 11, l'élément périphérique d'une part et les éléments formant nervure (20, 20*, 20', 20", 20''', 20'''', 20''''', 20'''''', 20''''''') d'autre part étant conçus avec des propriétés différentes, et/ou l'un au moins des éléments (10, 10*, 10', 10", 10''', 10'''', 10''''', 10'''''', 10''''''', 20, 20*, 20', 20", 20''', 20''''', 20''''', 20'''''', 20''''''') étant conçu avec un revêtement au moins dans des zones partielles.

13. Cage de palier à roulement selon l'une des revendications 1 à 12, la cage de palier à roulement étant conçue comme une cage de palier à rouleaux, destinée en particulier à un palier à rouleaux cylindrique, conique ou sphérique.

14. Cage de palier à roulement selon l'une des revendications 1 à 13, les éléments (10''''''', 20''''''') étant maintenus ensemble du fait que les éléments (10''''''', 20''''''') sont formés dans la zone de l'élément périphérique avec une rainure radialement circonférentielle dans laquelle un élément de retenue annulaire (35''''''') est inséré.
